# EUROPEAN PATENT SPECIFICATION

(11) **EP 3 186 698 B1**
(45) Date of publication and mention of the grant of the patent: **27.02.2019**
(21) Application number: 15763998.0
(22) Date of filing: 21.08.2015
(51) Int. Cl.: G06F 3/0489, G06F 3/14, G06F 3/147, G06F 3/048, G06F 3/0482, G06F 3/0484, G06F 9/451, G06F 3/0481

(54) **FULL SCREEN POP-OUT OF OBJECTS IN EDITABLE FORM**
VOLLBILDSCHIRMAUSSTELLUNG VON OBJEKTEN IN BEARBEITBARER FORM
POP-OUT PLEIN ÉCRAN D'OBJETS SOUS FORME MODIFIABLE

(30) Priority: 26.08.2014 US 201414468833
(43) Date of publication of application: 05.07.2017
(73) Proprietor: Microsoft Technology Licensing, LLC, Redmond, WA 98052-6399 (US)
(72) Inventor: GUPTA, Ranjit Kumar, Redmond, Washington 98052-6399 (US)
(74) Representative: Grünecker Patent- und Rechtsanwälte PartG mbB
(86) International application number: PCT/US2015/046191
(87) International publication number: WO 2016/032863

(56) References cited:
- US-A1- 2005 177 798
- US-A1- 2013 148 720
- US-A1- 2014 068 520
- US-A1- 2014 164 984
- US-B1- 8 769 431
- "Chapter 8: Linking and Embedding in Compound Files ED - Peter Weverka", 3 January 2007 (2007-01-03), OFFICE 2007 ALL-IN-ONE DESK REFERENCE FOR DUMMIES, WILEY PUBLISHING, PAGE(S) 727 - 736, XP009190591, ISBN: 978-0-471-78279-7

## Description

### BACKGROUND

Computer systems are currently in wide use. Some computer systems run applications that are used for creating, editing and displaying content.

Some examples of such computer systems include word processing applications that can be used to create, edit and display word processing documents. Spreadsheet applications can be used to create, edit and display spreadsheets. Presentation applications (such as slide presentation applications or other presentation applications) can be used to create, edit and display various types of presentations.

The content that is created, edited and displayed, can include individually selectable objects. For instance, a word processing document may include selectable text portions, along with graphs, charts, tables, etc. Similarly, spreadsheets may include rows, columns, individual cells, groups of cells, etc. Presentations can include individual slides, each of which can include a wide variety of different types of objects, that are displayed on a given slide. When a user wishes to edit an individual object, the applications provide edit functionality which enables the user to actuate user actuatable input mechanisms in order to perform editing functions on the objects.

Mobile devices are also currently in wide use. Mobile devices, can include cell phones, smart phones, tablets, or other relatively small computing devices. Mobile devices often have display screens that are small relative to those on other computing devices, such as on desktop computing devices, laptop computing devices, presentation display devices, etc. This can make it difficult for a user to interact with small objects that are displayed on the display screen of a mobile device. Not only is it difficult for a user to interact with an object, such as by editing the object, but it can also be difficult for the user to even view such objects. For instance, in a spreadsheet, it can be difficult to read or edit text inside individual spreadsheet cells. In a table in a word processing document, it can also be difficult to see or edit information displayed inside the table cells. Thus, it can be difficult for a user to view, edit, or otherwise interact with such objects on small screen devices, such as mobile devices. "Chapter 8: Linking and Embedding in Compound Files ED - Peter Weverka", 3 January 2007 (2007-01-03), OFFICE 2007 ALL-IN-ONE DESK REFERENCE FOR DUMMIES, WILEY PUBLISHING, PAGE(S) 727 - 736, ISBN: 978-0-471-78279-7, discloses linking and embedding selectable and editable objects in compound files. To edit an embedded object, a double-click on it replaces the program's tabs and buttons by tabs and buttons belonging to the program designed to handle the data. US 2014/068520 A1 discloses content presentation and interaction across multiple displays. US 2013/219303 A1 discloses providing a shared user interface by an application running on a first electronic device and a second electronic device wherein a first portion can be displayed at the first electronic device and a second portion at the second electronic device.

The discussion above is merely provided for general background information and is not intended to be used as an aid in determining the scope of the claimed subject matter.

### SUMMARY

An item of content is displayed on a display screen. A user interaction with an object within the item of content is detected, and the object is expanded, to full screen size, and displayed on a destination display screen, in editable form.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

Figure 1 is a block diagram of one example of a content generation architecture.
Figure 2 is a block diagram of a plurality of different display devices illustrating how objects can be selected and expanded to full screen.
Figure 3 is a block diagram showing a display screen on a mobile device and a display screen on a presentation device.
Figures 4A and 4B (collectively referred to as Figure 4) show a flow diagram illustrating one example of the operation of the content generation architecture shown in Figure 1 in allowing a user to expand selected objects to full screen, with edit functionality, in a multiple display screen environment.
Figure 5 is a block diagram showing the architecture of Figure 1 deployed in a cloud computing architecture.
Figures 6-8 show various examples of mobile devices.
Figure 9 is a block diagram of one example of a computing environment.

### DETAILED DESCRIPTION

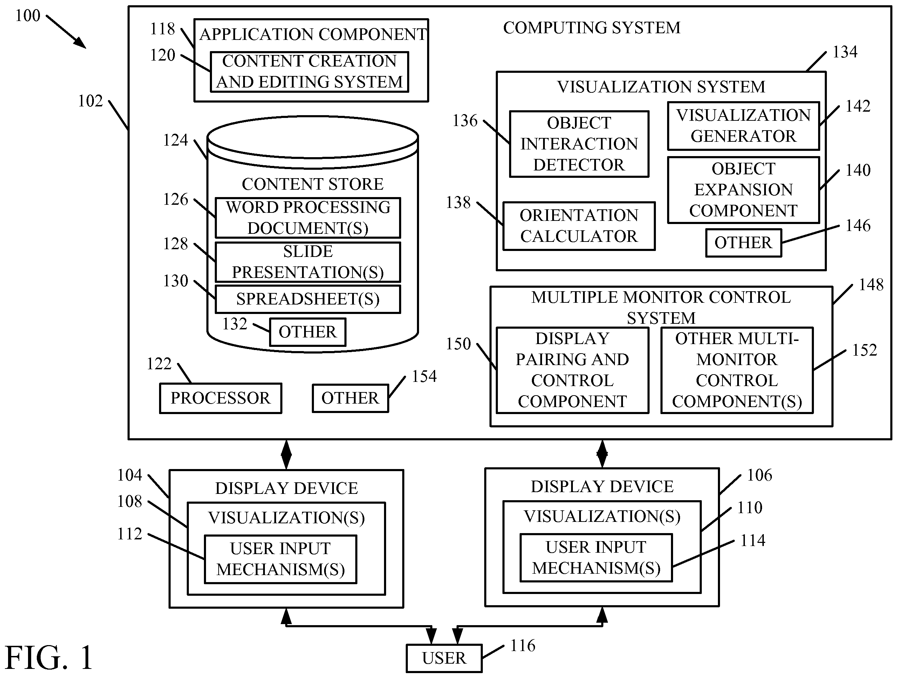

Figure 1 is a block diagram of one example of a content generation architecture 100. Architecture 100 illustratively includes computing system 102 that is shown operably connected to one or more display devices 104-106. Computing system 102 is also shown generating one or more visualizations 108-110 on display devices 104-106. The visualizations illustratively include user input mechanisms 112-114 for interaction by user 116. It will be noted that, in one example, there is only a single display device. However, Figure 1 shows that multiple display devices 104-106 are contemplated as well.

In one example, user 116 interacts with user input mechanisms 112-114 on one or more of the visualizations 108-110, in order to control and manipulate computing system 102. Computing system 102 can illustratively be used to create, edit and display content.

Therefore, in the example shown in Figure 1, computing system 102 illustratively includes application component 118 that includes a content creation and editing system 120, processor 122, content store 124 (which illustratively stores content, such as word processing documents 126, slide presentations 128, spreadsheets 130 and it can include other content 132 as well), visualization system 134 (which can include object interaction detector 136, orientation calculator 138, object expansion component 140, visualization generator 142 and it can include other items 146 as well), multiple monitor system 148 (which can include display pairing and control component 150, and other multi-monitor control components 152), and it can include other items 154 as well. Before describing one example of the operation of architecture 100 in allowing user 116 to select individual objects to pop-out to a full screen display, a brief description of computing system 102 will first be provided.

Application component 118 illustratively runs one or more content creation applications, such as word processing applications, slide presentation applications, spreadsheet applications, etc. The applications illustratively include their own content creation and editing systems 120 so that a user interacting with the running application can create, edit and display content. For example, user 116 can use application component 118 to run a word processing application in order to create word processing documents 126. It can run a slide presentation application in order to create slide presentations 128, and it can run a spreadsheet application in order to create spreadsheets 130. Of course, it can interact with other applications in order to create other content 132 as well.

The content may illustratively have individually selectable objects. For instance, word processing documents 126 may include not only selectable text portions, but also graphs, charts, clip art, tables, among a wide variety of other objects. Each of those objects may be selectable by user 116, using the content creation and editing system 120 for the word processing application. The user can select the object in order to edit it, delete it, or modify it in other ways.

The same is true of slide presentations 128 and spreadsheets 130. For instance, slide presentations 128 may include a plurality of different slides. Each slide may have individually selectable objects displayed thereon. For example, a slide can have individual text objects, graphic objects, etc. Each of those may have selectable animations applied to them. User 116 may use the content creation and editing system 120 in the slide presentation application in order to select one or more of the individual objects on the slide so that the user can edit the object. Spreadsheets 130 may have individual cells or groups of cells (or other objects) that can be selected for editing as well.

Multiple monitor control system 148 can provide functionality so that user 116 can display various items of content using multiple monitors (or display devices) 104-106. For instance, one of the display devices 104 may be on a smart phone or other mobile device of user 116. The other display device may be a large screen display device for a presentation system. The two devices may be paired. In that scenario, display pairing and control component 150 illustratively generates user input mechanisms that can be actuated by user 116 in order to control which items are displayed on which display device. For instance, the user may launch a presentation application using his or her mobile device, but have the presentation displayed on the display device for the presentation system. Of course, this is only one example of how paired devices can be controlled.

In another example, the display devices are two separate monitors that are used by the same user in a dual monitor or multi-monitor display mode. In that case, other multi-monitor control components 152 illustratively provide functionality so that user 116 can move the display generated by various applications or components from one monitor to the other. There are also a variety of other multi-monitor control components 152 that can be deployed.

As mentioned in the background, user 116 may be viewing an item of content (such as a word processing document 126) on a mobile device. In that case, it may be difficult for the user to view, select, edit or otherwise modify an individually selectable object within the word processing document. Thus, object interaction detector 136 in visualization system 134 detects that the user is interacting with, or attempting to interact with, an individual object or a group of objects. Orientation calculator 138 illustratively calculates whether the object, once it is expanded, will better be displayed in the portrait or landscape orientation. Once that is calculated, object expansion component 140 automatically calculates the expanded dimensions of the selected object, and visualization generator 142 automatically generates a full screen, expanded view of the selected object, in editable form, without any further action by the user. The full screen view can be displayed on the same display device that the user was initially using, or it can be displayed on a separate display device. This is described in greater detail below.

In any case, the full screen, expanded view of the object is displayed in editable form. Therefore, user 116 can use the content creation and editing system 120 of the application that is used to create and display the content, in order to edit the full screen view of the object. Once user 116 is finished viewing the full screen view of the object, the user can provide a dismiss input, and the display reverts to its previous form, where the object is displayed in the word processing document in its non-expanded form.

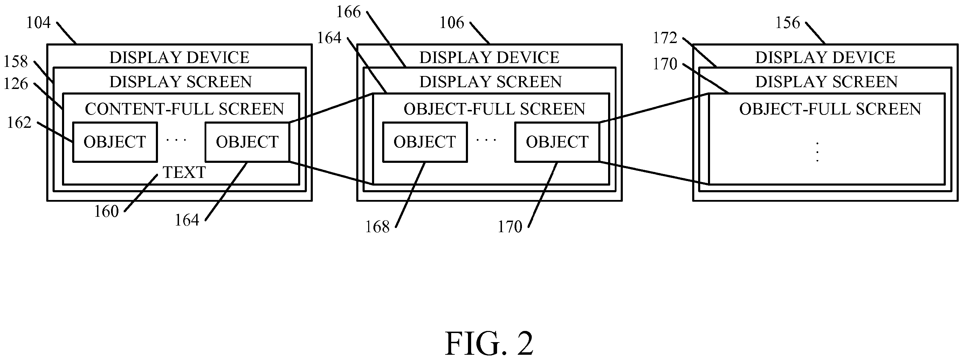

Figure 2 shows one example of a set of display devices illustrating expanded views. Figure 2 shows display device 104, display device 106, and display device 156. It will be noted that display devices 104, 106 and 156 can all be the same display device, or they can be different display devices, such as different monitors, different mobile devices, etc.

In the example shown in Figure 2, display device 104 is shown with display screen 158. Display screen 158 is shown displaying a full screen view of one of the items of content from content store 124. By way of example, it is assumed for purposes of this discussion that the content is a word processing document 126. In the example shown, the word processing document 126 includes one or more textual portions 160, as well as a plurality of individually selectable objects 162-164.

It may be that user 116 wishes to modify the text 160 or one of the objects 162-164. For instance, assume that object 164 is a table with a plurality of different table cells displayed therein. However, it may be difficult for user 116 to edit an individual table cell within the table that comprises object 164. Therefore, in one example, the user can select object 164 and it automatically expands to a full screen display on a destination display screen. For instance, display device 106 shows display screen 166 as the destination display screen with object 164 expanded to full screen size.

Again, it may be that the destination display screen 166 is the same as display screen 158 on a mobile device being used by the user. In that case, once object 164 is expanded to full screen size, it temporarily inhibits viewing of any of the other portions of content 126. Alternatively, destination display screen 166 may be a display screen on a separate device, (e.g., a separate monitor) such as a large display screen of a presentation device, etc. In any case, the object 164 is expanded to full screen, in editable form, and displayed on the destination display screen 166.

Figure 2 also shows that the object 164 may, itself, have multiple embedded objects 168-170. For example, continuing with the scenario where object 164 is a table, it may be that objects 168-170 comprise individual cells in the table. It may also be that user 116 wishes to view or edit one of the individual cells. For instance, assume that user 116 wishes to edit the content of the cell represented by object 170. In that case, the user can select object 170 and it automatically expands to full screen view as well, on a destination display screen. The destination display screen can be on the same device, or a different display device.

Figure 2 shows that display device 156 includes display screen 172 and it further shows that object 170 has now been expanded to a full screen display on display screen 172. Of course, this type of nested object expansion can continue, as long as there are individually selectable objects within any of the full screen displays. It will be noted that, in one example, all of the full screen displays are displayed in editable form so that user 116 can provide edit inputs, through edit user input mechanisms generated by the corresponding content creation and editing system 120, in order to edit the expanded objects.

The user can then illustratively provide some type of dismiss input (such as a touch gesture, a "back" input, a "cancel" input, etc.) to move backward in the progression of expanded views shown in Figure 2. For instance, if the display device is displaying object 170 in full screen, and the user provides a dismiss input, the system will revert to displaying object 164 full screen. If the user again provides a dismiss input, the system will revert to displaying content 126 full screen. In another example, the user can skip from displaying object 170 full screen to displaying content 126 full screen, with a single gesture. All of these options, and others, are contemplated herein.

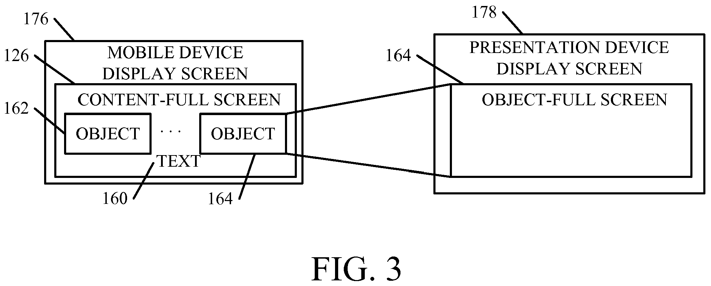

Figure 3 shows another example of how object expansion can be used. Figure 3 shows that the user is using a mobile device with a mobile device display screen 176. The mobile device display screen is displaying content 126 in full screen, editable form. Content 126, again, includes individually selectable objects 162-164, along with text 160. It may be that the user is presenting content 126 to an audience on a display screen of a paired presentation device, illustrated by 178 in Figure 3. However, it may also be that the user wishes to have the audience only see object 164, without seeing the remainder of the content 126. In that case, user 116 can provide an input identifying the destination display screen as the display screen 178 of the presentation device. The user can then interact with object 164. It will be automatically expanded to a full screen display on display screen 178, without further user interaction. Because it is displayed in full screen, it inhibits the audience from seeing any of the remainder of content 126. Of course, it will be noted that user 116 can display all of content 126 on display screen 178 as well, and still use the object expansion in order to show object 164 in more detail, in expanded form, for the audience.

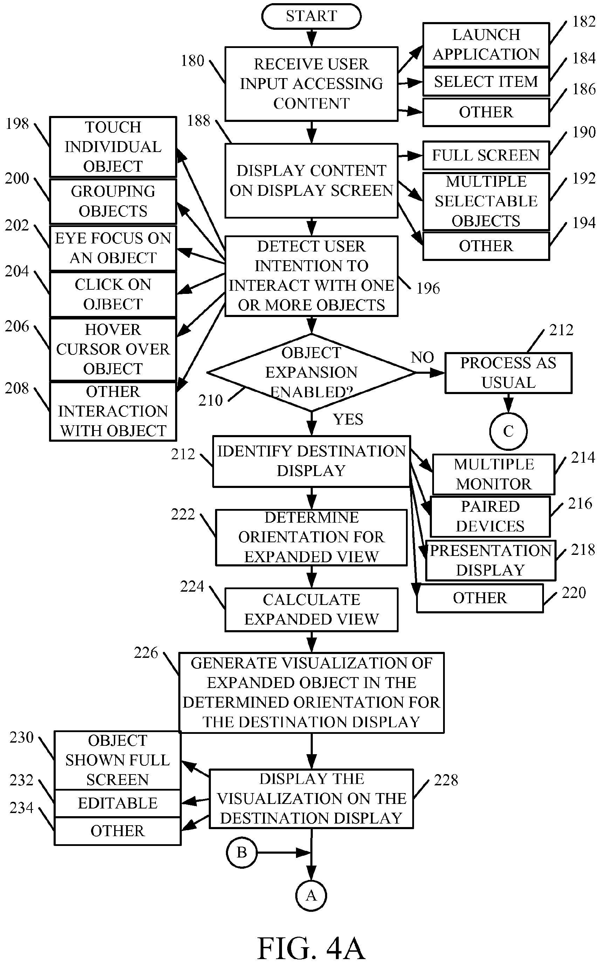

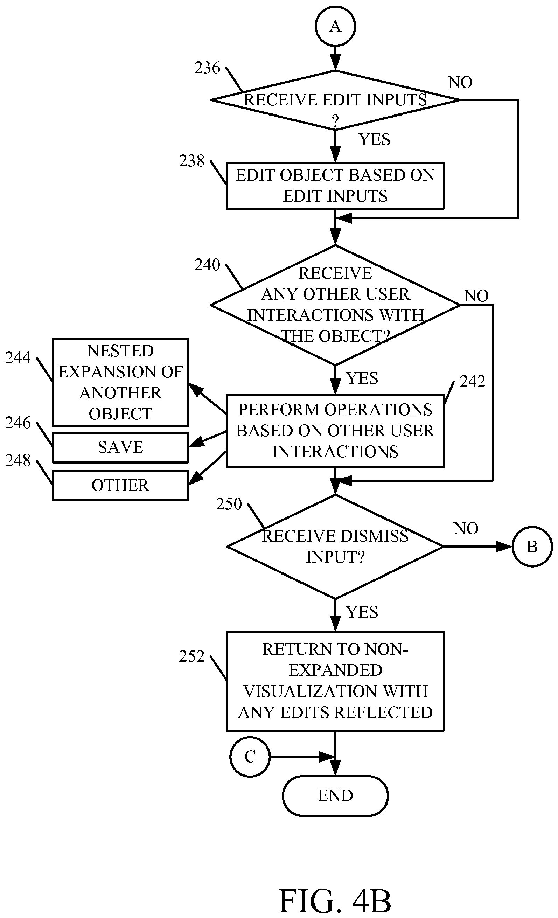

Figures 4A and 4B (collectively referred to as Figure 4) illustrate a flow diagram showing one example of the operation of computing system 102 in generating expanded views of objects. Figure 4A shows that system 102 first receives a user input accessing an item of content in data store 124. This is indicated by block 180 in Figure 4. The user can do this by launching an application 182 (such as a word processing application, a presentation application, a spreadsheet application, etc.) and then selecting an item of content (such as a word processing document 126, a slide presentation 128, a spreadsheet 130, etc.) as indicated by block 184. The user can provide inputs accessing content in other ways as well, and this is indicated by block 186.

Visualization system 134 then displays the accessed content on the display screen. This is indicated by block 188. In one example, for instance, the content is a word processing document 126, and it is displayed full screen on the particular display device that the user is using. This is indicated by block 190. In one example, the full screen display shows the content along with user input mechanisms that can be actuated or invoked, such as mechanisms on command bars, ribbons, edit panes or other mechanisms. The content can include multiple selectable objects, as indicated by block 192. Those objects are illustratively displayed within the full screen display of the content. The content can be displayed on the display screen in other ways as well, and this is indicated by block 194.

Object interaction detector 136 then detects user interaction with, or the user's intention to interact with, one or more objects. This is indicated by block 196. This can be done in a wide variety of ways. For instance, when the content is displayed on a touch sensitive screen, the user can touch an individual object. In that case, object interaction detector 136 detects that the user wishes to interact with that object. Touching an individual object is indicated by block 198.

In another example, the user can group objects together. The user can do this by using a touch and drag gesture, or by selecting individual objects, independently of one another, or in other ways. Grouping objects is indicated by block 200. In that case, detector 136 detects that the user wishes to interact with the group of objects.

In another example, object interaction detector 136 is an ocular detector which detects the user's eye focus on an object on the display. This is indicated by block 202.

In another example, the user is using a point and click device, such as a mouse or track ball, and the user clicks on an object. In that case, object interaction detector 136 again detects that the user is interacting with the object. This is indicated by block 204.

In another example, the user simply hovers the cursor over the object for a sufficient period of time. Object interaction detector 136 can detect this as the user's intention to interact with the object as well, and this is indicated by block 206.

It will also be noted that the user can interact with, or indicate an intention to interact with, an object on the display in a wide variety of other ways. Object interaction detector 136 can illustratively detect these ways as well. This is indicated by block 208.

Visualization system 134 then determines whether the object expansion feature is enabled. In one example, the object expansion feature can be disabled by the user, by an administrator, or otherwise. In another example, it is always enabled. However, in the example illustrated in Figure 4, visualization system 134 determines whether it is enabled. This is indicated by block 210. If not, then the user interaction with the object is processed as usual, without expanding it to full screen. This is indicated by block 212.

However, if, at block 210, it is determined that the object expansion feature is enabled, then orientation calculator 138 identifies the destination display, where the expanded object (which has been identified as an object that the user is interacting with, or intends to interact with) is to be displayed, full screen. This is indicated by block 212. By way of example, it may be that the user is simply using a single device, and the destination display screen will therefore be the same display screen on which the user is interacting with the object. In another example, the user may be operating in multi-monitor mode, in which case the destination display screen may be on a different display device. Identifying the destination display screen based on operation in the multiple-monitor mode is indicated by block 214.

In another example, the device that the user is using may be paired with another device. For instance, if the user is using a smart phone and wishes to expand the object to work on it on the user's desktop computer, the smart phone may be paired with the desktop computer, so that the display screen used on the desktop computer is identified as the destination display screen. Having the destination display screen be on a paired device is indicated by block 216.

In another example, the user may be giving a presentation. In that case, the user may be using a smart phone, but the user wishes the expanded object to be displayed on the display screen of a presentation system. In that case, the destination display screen will be the presentation display screen. This is indicated by block 218. Of course, the destination display screen can be other display screens as well, and this is indicated by block 220.

Orientation calculator 138 then calculates the orientation in which the object will be displayed, once expanded. Determining the orientation for the expanded view is indicated by block 222 in Figure 4. By way of example, if the destination display screen is longer than it is tall, then orientation calculator 138 accesses the object to be expanded to determine its relative length and width measurements. It then identifies which orientation for displaying the object on the destination display screen will best display the information in the object. As a specific example, if the object is a table that has many columns but only few rows, then it may be best to display it in landscape orientation. However, if it is a table with many rows, but few columns, it may be best to display it in portrait orientation. Of course, this could change based upon the geometry of the display device, based upon the application, based on the geometry or type of the object to be displayed, etc.

Object expansion component 140 then calculates the expanded view for the identified object. For instance, it can calculate how big the outer periphery of the object will be, so that it can fit, full screen, on the destination display. Calculating the expanded view is indicated by block 224 in Figure 4.

Visualization generator 142 then generates the visualization of the expanded object in the determined orientation, for the destination display screen, and visualization system 134 then displays the visualization on the destination display screen. This is indicated by blocks 226 and 228 in Figure 4. The expanded view illustratively shows the object, in full screen, on the destination display screen. This is indicated by block 230. It also illustratively displays the object in editable form. This is indicated by block 232. The full screen display can also include displayed user input mechanisms (such as command bars, ribbons, edit panes, slide presentation thumbnails, etc.). Thus, a user can more easily view the displayed object, and edit it, because it is automatically displayed full screen. Displaying the visualization on the destination display screen can be done in other ways as well, and this is indicated by block 234.

While the object is displayed in the expanded view, application component 118 (and specifically content creation and editing system 120) illustratively detects whether the user has provided any edit inputs to edit the object. This is indicated by block 236 in Figure 4. If so, system 120 edits the object based on the edit inputs. This is indicated by block 238.

The system also determines whether the user has provided any other interactions with the object. This is indicated by block 240 in Figure 4. If so, the system performs operations based on the other user interaction inputs that have been received. This is indicated by block 242. By way of example, it may be that the user has selected another object that is embedded within the object that is currently displayed full screen, and the newly selected object is then displayed full screen on a destination display screen. Nested expansion of another object, in this way, is indicated by block 244. The user can provide other inputs interacting with the object, such as a save input, in which case the system saves the edited object. This is indicated by block 246. The user can provide other interactions with the object as well, and taking corresponding actions is indicated by block 248.

At some point, visualization system 134 receives a dismiss input. For instance, the user can actuate a "cancel" button on the user interface display. The user can also use a pinch gesture or another type of gesture on a touch sensitive display. The user can actuate a "back" user input mechanism, or the user can provide another type of input that is intended to dismiss the expanded view display. Determining whether such an input is received is indicated by block 250 in Figure 4. If not, processing reverts to block 236 where the system waits for either an edit input or another type of user interaction. However, if, at block 250, it is determined that the user has provided the dismiss input, then visualization system 134 returns to the non-expanded visualization, with any edits to the object reflected in that visualization. This is indicated by block 252.

It can thus be seen that, by simply interacting with, or reflecting an intention to interact with, an object on a display, the object is automatically expanded to full screen view, with editing functionality. Therefore, a user can easily reflect an intention to interact with an object, have that object automatically expanded to full screen view, and then edit it. The user can then dismiss the expanded view and return to the normal view, with the edits reflected in the object. This significantly improves performance. It improves the performance of the user, because the user is more efficient. The user can edit objects even on a relatively small screen device, by simply interacting with the object, having it automatically expanded to full screen view, and then editing the object. The computing system on which the present system is deployed is also improved. Because the object is enlarged to full screen, the user can more quickly and accurately edit it. This enables the user to avoid a scenario where the user attempts to make an edit, but because the object is so small, makes the wrong edit, and then erases that edit and attempts to make another edit. All of these erroneous interactions increase the processing overhead of the computing system and therefore affect its performance. However, by automatically expanding the desired object to full screen view, the edits can be made more precisely using gestures or editing inputs, so that the system need not repeatedly make erroneous inputs, erase them and make other inputs. This saves processing overhead, and it also saves user time, rendering both the computer system and the user more efficient.

The present discussion has mentioned processors and servers. In one embodiment, the processors and servers include computer processors with associated memory and timing circuitry, not separately shown. They are functional parts of the systems or devices to which they belong and are activated by, and facilitate the functionality of the other components or items in those systems.

Also, a number of user interface displays have been discussed. They can take a wide variety of different forms and can have a wide variety of different user actuatable input mechanisms disposed thereon. For instance, the user actuatable input mechanisms can be text boxes, check boxes, icons, links, drop-down menus, search boxes, etc. They can also be actuated in a wide variety of different ways. For instance, they can be actuated using a point and click device (such as a track ball or mouse). They can be actuated using hardware buttons, switches, a joystick or keyboard, thumb switches or thumb pads, etc. They can also be actuated using a virtual keyboard or other virtual actuators. In addition, where the screen on which they are displayed is a touch sensitive screen, they can be actuated using touch gestures. Also, where the device that displays them has speech recognition components, they can be actuated using speech commands.

A number of data stores have also been discussed. It will be noted they can each be broken into multiple data stores. All can be local to the systems accessing them, all can be remote, or some can be local while others are remote. All of these configurations are contemplated herein.

Also, the figures show a number of blocks with functionality ascribed to each block. It will be noted that fewer blocks can be used so the functionality is performed by fewer components. Also, more blocks can be used with the functionality distributed among more components.

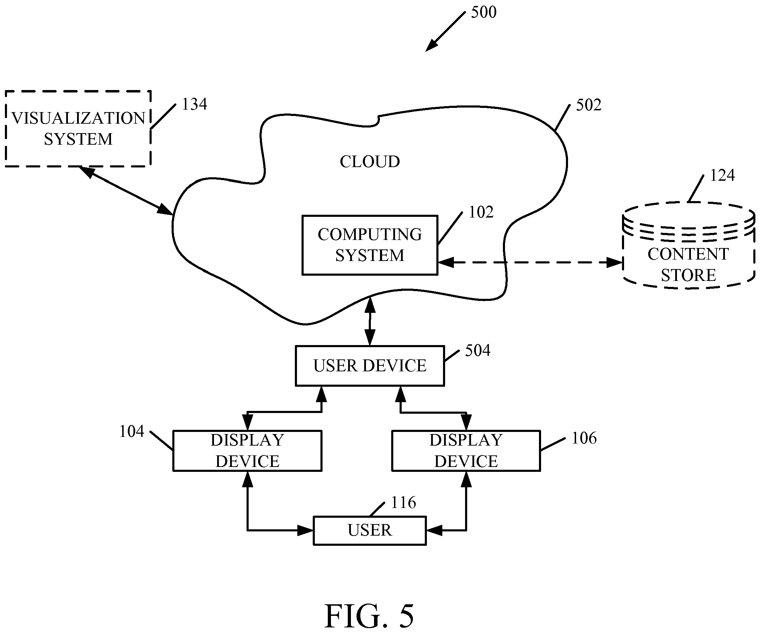

Figure 5 is a block diagram of architecture 100, shown in Figure 1, except that its elements are disposed in a cloud computing architecture 500. Cloud computing provides computation, software, data access, and storage services that do not require end-user knowledge of the physical location or configuration of the system that delivers the services. In various embodiments, cloud computing delivers the services over a wide area network, such as the internet, using appropriate protocols. For instance, cloud computing providers deliver applications over a wide area network and they can be accessed through a web browser or any other computing component. Software or components of architecture 100 as well as the corresponding data, can be stored on servers at a remote location. The computing resources in a cloud computing environment can be consolidated at a remote data center location or they can be dispersed. Cloud computing infrastructures can deliver services through shared data centers, even though they appear as a single point of access for the user. Thus, the components and functions described herein can be provided from a service provider at a remote location using a cloud computing architecture. Alternatively, they can be provided from a conventional server, or they can be installed on client devices directly, or in other ways.

The description is intended to include both public cloud computing and private cloud computing. Cloud computing (both public and private) provides substantially seamless pooling of resources, as well as a reduced need to manage and configure underlying hardware infrastructure.

A public cloud is managed by a vendor and typically supports multiple consumers using the same infrastructure. Also, a public cloud, as opposed to a private cloud, can free up the end users from managing the hardware. A private cloud may be managed by the organization itself and the infrastructure is typically not shared with other organizations. The organization still maintains the hardware to some extent, such as installations and repairs, etc.

In the example shown in Figure 5, some items are similar to those shown in Figure 1 and they are similarly numbered. Figure 5 specifically shows that computing system 102 can be located in cloud 502 (which can be public, private, or a combination where portions are public while others are private). Therefore, user 116 uses a user device 504 to access those systems through cloud 502.

Figure 5 also depicts another example of a cloud architecture. Figure 5 shows that it is also contemplated that some elements of computing system 102 can be disposed in cloud 502 while others are not. By way of example, data store124 can be disposed outside of cloud 502, and accessed through cloud 502. In another example, visualization system 134 can also be outside of cloud 502. Regardless of where they are located, they can be accessed directly by device 504, through a network (either a wide area network or a local area network), they can be hosted at a remote site by a service, or they can be provided as a service through a cloud or accessed by a connection service that resides in the cloud. All of these architectures are contemplated herein.

It will also be noted that architecture 100, or portions of it, can be disposed on a wide variety of different devices. Some of those devices include servers, desktop computers, laptop computers, tablet computers, or other mobile devices, such as palm top computers, cell phones, smart phones, multimedia players, personal digital assistants, etc.

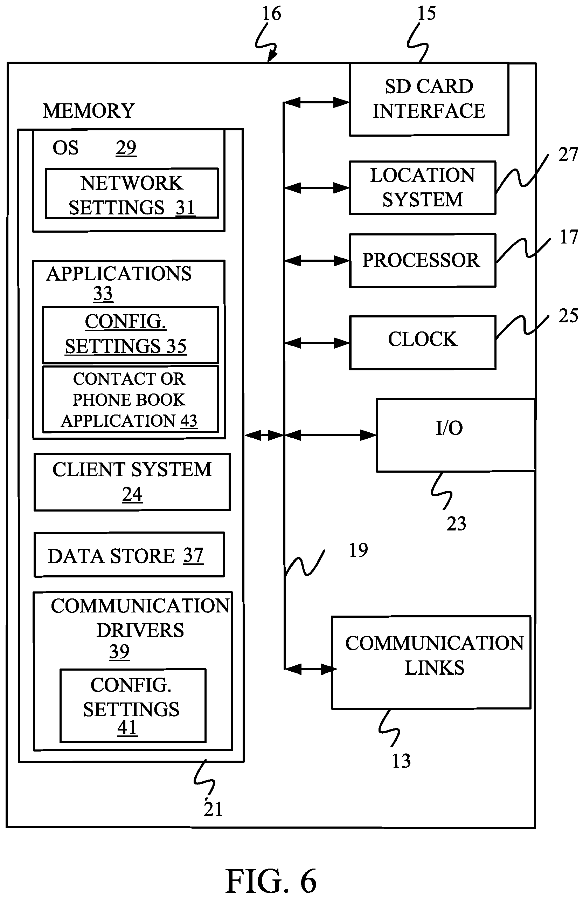

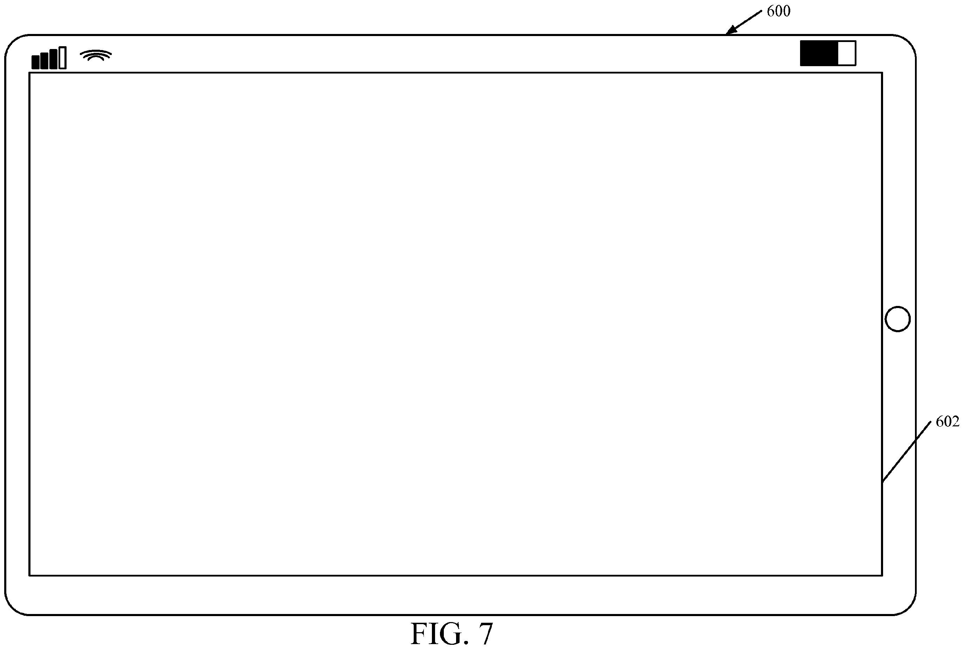

Figure 6 is a simplified block diagram of one illustrative embodiment of a handheld or mobile computing device that can be used as a user's or client's hand held device 16, in which the present system (or parts of it) can be deployed. Figures 7-8 are examples of handheld or mobile devices.

Figure 6 provides a general block diagram of the components of a client device 16 that can run components of computing system 102 or that interacts with architecture 100, or both. In the device 16, a communications link 13 is provided that allows the handheld device to communicate with other computing devices and under some embodiments provides a channel for receiving information automatically, such as by scanning. Examples of communications link 13 include an infrared port, a serial/USB port, a cable network port such as an Ethernet port, and a wireless network port allowing communication though one or more communication protocols including General Packet Radio Service (GPRS), LTE, HSPA, HSPA+ and other 3G and 4G radio protocols, 1Xrtt, and Short Message Service, which are wireless services used to provide cellular access to a network, as well as Wi-Fi protocols, and Bluetooth protocol, which provide local wireless connections to networks.

Under other embodiments, applications or systems are received on a removable Secure Digital (SD) card that is connected to a SD card interface 15. SD card interface 15 and communication links 13 communicate with a processor 17 (which can also embody processor 122 from Figure 1 or those in device 504) along a bus 19 that is also connected to memory 21 and input/output (I/O) components 23, as well as clock 25 and location system 27.

I/O components 23, in one embodiment, are provided to facilitate input and output operations. I/O components 23 for various embodiments of the device 16 can include input components such as buttons, touch sensors, multi-touch sensors, optical or video sensors, voice sensors, touch screens, proximity sensors, microphones, tilt sensors, and gravity switches and output components such as a display device, a speaker, and or a printer port. Other I/O components 23 can be used as well.

Clock 25 illustratively comprises a real time clock component that outputs a time and date. It can also, illustratively, provide timing functions for processor 17.

Location system 27 illustratively includes a component that outputs a current geographical location of device 16. This can include, for instance, a global positioning system (GPS) receiver, a LORAN system, a dead reckoning system, a cellular triangulation system, or other positioning system. It can also include, for example, mapping software or navigation software that generates desired maps, navigation routes and other geographic functions.

Memory 21 stores operating system 29, network settings 31, applications 33, application configuration settings 35, data store 37, communication drivers 39, and communication configuration settings 41. Memory 21 can include all types of tangible volatile and non-volatile computer-readable memory devices. It can also include computer storage media (described below). Memory 21 stores computer readable instructions that, when executed by processor 17, cause the processor to perform computer-implemented steps or functions according to the instructions. Similarly, device 16 can have a client system 24 which can run various business applications or embody parts or all of system 102. Processor 17 can be activated by other components to facilitate their functionality as well.

Examples of the network settings 31 include things such as proxy information, Internet connection information, and mappings. Application configuration settings 35 include settings that tailor the application for a specific enterprise or user. Communication configuration settings 41 provide parameters for communicating with other computers and include items such as GPRS parameters, SMS parameters, connection user names and passwords.

Applications 33 can be applications that have previously been stored on the device 16 or applications that are installed during use, although these can be part of operating system 29, or hosted external to device 16, as well.

Figure 7 shows one embodiment in which device 16 is a tablet computer 600. In Figure 7, computer 600 is shown with user interface display screen 602. Screen 602 can be a touch screen (so touch gestures from a user's finger can be used to interact with the application) or a pen-enabled interface that receives inputs from a pen or stylus. It can also use an on-screen virtual keyboard. Of course, it might also be attached to a keyboard or other user input device through a suitable attachment mechanism, such as a wireless link or USB port, for instance. Computer 600 can also illustratively receive voice inputs as well.

Additional examples of devices 16 can be used as well. Device 16 can be a feature phone, smart phone or mobile phone. The phone can include a set of keypads for dialing phone numbers, a display capable of displaying images including application images, icons, web pages, photographs, and video, and control buttons for selecting items shown on the display. The phone can include an antenna for receiving cellular phone signals such as General Packet Radio Service (GPRS) and 1Xrtt, and Short Message Service (SMS) signals. In some examples, the phone also includes a Secure Digital (SD) card slot that accepts a SD card.

The mobile device can also be a personal digital assistant (PDA) or a multimedia player or a tablet computing device, etc. (hereinafter referred to as PDA). The PDA includes an inductive screen that senses the position of a stylus (or other pointers, such as a user's finger) when the stylus is positioned over the screen. This allows the user to select, highlight, and move items on the screen as well as draw and write. The PDA can also include a number of user input keys or buttons which allow the user to scroll through menu options or other display options which are displayed on the display, and allow the user to change applications or select user input functions, without contacting the display. Although not shown, the PDA can include an internal antenna and an infrared transmitter/receiver that allow for wireless communication with other computers as well as connection ports that allow for hardware connections to other computing devices. Such hardware connections are typically made through a cradle that connects to the other computer through a serial or USB port. As such, these connections are non-network connections.

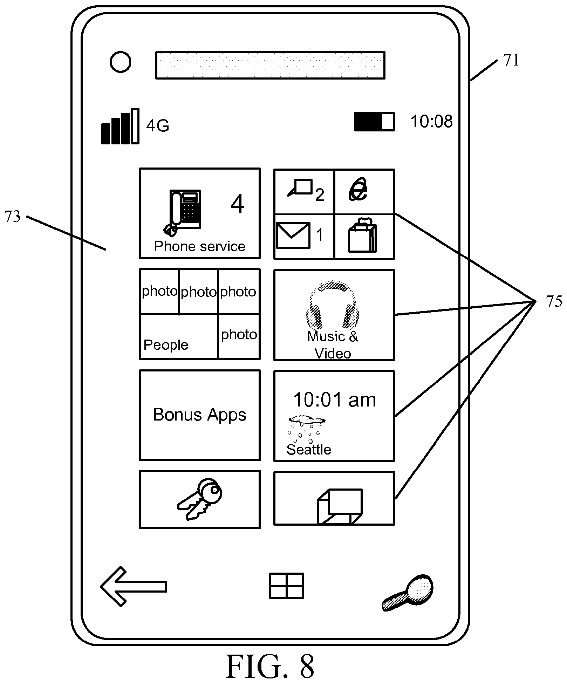

Figure 8 shows that the phone can be a smart phone 71. Smart phone 71 has a touch sensitive display 73 that displays icons or tiles or other user input mechanisms 75. Mechanisms 75 can be used by a user to run applications, make calls, perform data transfer operations, etc. In general, smart phone 71 is built on a mobile operating system and offers more advanced computing capability and connectivity than a feature phone.

Note that other forms of the devices 16 are possible.

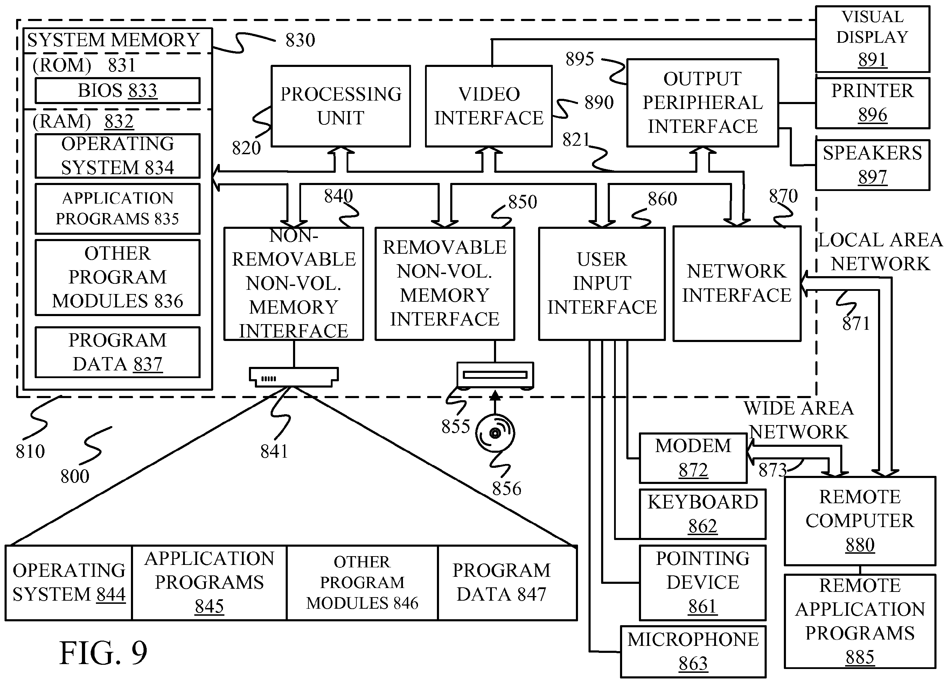

Figure 9 is one embodiment of a computing environment in which architecture 100, or parts of it, (for example) can be deployed. With reference to Figure 9, an exemplary system for implementing some embodiments includes a general-purpose computing device in the form of a computer 810. Components of computer 810 may include, but are not limited to, a processing unit 820 (which can comprise processor 122 or those in device 504), a system memory 830, and a system bus 821 that couples various system components including the system memory to the processing unit 820. The system bus 821 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus. Memory and programs described with respect to Figure 1 can be deployed in corresponding portions of Figure 9.

Computer 810 typically includes a variety of computer readable media. Computer readable media can be any available media that can be accessed by computer 810 and includes both volatile and nonvolatile media, removable and non-removable media. By way of example, and not limitation, computer readable media may comprise computer storage media and communication media. Computer storage media is different from, and does not include, a modulated data signal or carrier wave. It includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 810. Communication media typically embodies computer readable instructions, data structures, program modules or other data in a transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 830 includes computer storage media in the form of volatile and/or nonvolatile memory such as read only memory (ROM) 831 and random access memory (RAM) 832. A basic input/output system 833 (BIOS), containing the basic routines that help to transfer information between elements within computer 810, such as during start-up, is typically stored in ROM 831. RAM 832 typically contains data and/or program modules that are immediately accessible to and/or presently being operated on by processing unit 820. By way of example, and not limitation, Figure 9 illustrates operating system 834, application programs 835, other program modules 836, and program data 837.

The computer 810 may also include other removable/non-removable volatile/nonvolatile computer storage media. By way of example only, Figure 9 illustrates a hard disk drive 841 that reads from or writes to non-removable, nonvolatile magnetic media, and an optical disk drive 855 that reads from or writes to a removable, nonvolatile optical disk 856 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 841 is typically connected to the system bus 821 through a non-removable memory interface such as interface 840, and optical disk drive 855 are typically connected to the system bus 821 by a removable memory interface, such as interface 850.

Alternatively, or in addition, the functionality described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc.

The drives and their associated computer storage media discussed above and illustrated in Figure 9, provide storage of computer readable instructions, data structures, program modules and other data for the computer 810. In Figure 9, for example, hard disk drive 841 is illustrated as storing operating system 844, application programs 845, other program modules 846, and program data 847. Note that these components can either be the same as or different from operating system 834, application programs 835, other program modules 836, and program data 837. Operating system 844, application programs 845, other program modules 846, and program data 847 are given different numbers here to illustrate that, at a minimum, they are different copies.

A user may enter commands and information into the computer 810 through input devices such as a keyboard 862, a microphone 863, and a pointing device 861, such as a mouse, trackball or touch pad. Other input devices (not shown) may include a joystick, game pad, satellite dish, scanner, or the like. These and other input devices are often connected to the processing unit 820 through a user input interface 860 that is coupled to the system bus, but may be connected by other interface and bus structures, such as a parallel port, game port or a universal serial bus (USB). A visual display 891 or other type of display device is also connected to the system bus 821 via an interface, such as a video interface 890. In addition to the monitor, computers may also include other peripheral output devices such as speakers 897 and printer 896, which may be connected through an output peripheral interface 895.

The computer 810 is operated in a networked environment using logical connections to one or more remote computers, such as a remote computer 880. The remote computer 880 may be a personal computer, a hand-held device, a server, a router, a network PC, a peer device or other common network node, and typically includes many or all of the elements described above relative to the computer 810. The logical connections depicted in Figure 9 include a local area network (LAN) 871 and a wide area network (WAN) 873, but may also include other networks. Such networking environments are commonplace in offices, enterprise-wide computer networks, intranets and the Internet.

When used in a LAN networking environment, the computer 810 is connected to the LAN 871 through a network interface or adapter 870. When used in a WAN networking environment, the computer 810 typically includes a modem 872 or other means for establishing communications over the WAN 873, such as the Internet. The modem 872, which may be internal or external, may be connected to the system bus 821 via the user input interface 860, or other appropriate mechanism. In a networked environment, program modules depicted relative to the computer 810, or portions thereof, may be stored in the remote memory storage device. By way of example, and not limitation, Figure 9 illustrates remote application programs 885 as residing on remote computer 880. It will be appreciated that the network connections shown are exemplary and other means of establishing a communications link between the computers may be used.

It should also be noted that the different embodiments described herein can be combined in different ways. That is, parts of one or more embodiments can be combined with parts of one or more other embodiments. All of this is contemplated herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A computing system (102), comprising:
an application component (118) that includes a content and editing system (120) and that runs one or more content creation applications being one of word processing applications, slide presentation applications, and spreadsheet applications to display an item of content (126, 128, 130) on a computing system display screen (158, 166, 172, 602), the item of content including a selectable object (162-164, 168-170), and the item of content being one of a word processing document (126), a slide presentation (128), and a spreadsheet (130);
a processor (122);
a content store (124);
a visualization system (134) comprising:
an object interaction detector (136) that detects user interaction with the selectable object within the item of content;
an orientation calculator (138) that identifies a destination display (106, 156), where an expanded object which has been identified as the selectable object that a user is interacting with is to be displayed, full screen, and that calculates an orientation in which the selectable object will be displayed, once expanded;
an object expansion component (140) that calculates an expanded view of the selectable object; and
a visualization generator (142) that automatically generates the expanded view of the selectable object in editable form, based on the detected user interaction, wherein the expanded view shows the selectable object, in full screen on a screen (166, 172, 602) of the destination display, and that automatically displays the expanded view of the selectable object on the screen of the destination display.

2. The computing system of claim 1 wherein the screen (602) of the destination display is the computing system display screen.

3. The computing system of claim 1 wherein the computing system display screen comprises a display screen on a mobile device.

4. A method, comprising:
displaying an item of content (126, 128, 130) on a display screen (158,166, 172, 602) by an application component (118) that includes a content and editing system (120) and that runs one or more content creation applications being one of word processing applications, slide presentation applications, and
spreadsheet applications, the item of content including a selectable object (162-164, 168-170), and the item of content being one of a word processing document (126), a slide presentation (128), and a spreadsheet (130);
detecting user interaction with the selectable object within the item of content by an object interaction detector (136);
identifying a destination display (106, 156), where an expanded object which has been identified as the selectable object that a user is interacting with is to be displayed, full screen, and calculating an orientation in which the selectable object will be displayed, once expanded;
calculating an expanded view of the selectable object; and
automatically generating the expanded view of the selectable object in editable form, based on the detected user interaction, wherein the expanded view shows the selectable object, in full screen on a screen (166, 172, 602) of the destination display, and automatically displaying the expanded view of the selectable object on the screen of the destination display.

5. The method of claim 4 and further comprising:
receiving an edit user input through the expanded view;
performing an edit on the selectable object based on the edit user input; and
upon exiting the expanded view, saving the edit to the selectable object.

## Patentansprüche

1. Eine Computeranlage (102) umfassend:
eine Anwendungskomponente (118), die eine Inhalts- und Editiervorrichtung (120) umfasst und die eine oder mehrere Inhalterzeugungsanwendungen betreibt, die eines von Textverarbeitungsprogrammen, Folienpräsentationsprogrammen und Tabellenprogrammen ist/sind, um ein Inhaltselement (126, 128, 130) auf einem Bildschirm (158, 166, 172, 602) der Computeranlage darzustellen, wobei das Inhaltselement ein auswählbares Objekt (162-164, 168-170) umfasst und das Inhaltselement eines von einem Textverarbeitungsprogramm (126), einem Folienpräsentationsprogramm (128) und einer Tabellenkalkulation (130) ist;
einen Prozessor (122);
einen Inhaltsspeicher (124);
eine Visualisierungsvorrichtung (134) umfassend:
einen Objektinteraktionsdetektor (136), der eine Nutzerinteraktion mit dem auswählbaren Objekt in dem Inhaltselement detektiert;
einen Orientierungsberechner (138), der einen Zielbildschirm (106, 156) identifiziert, auf dem ein expandiertes Objekt, das als das auswählbare Objekt identifiziert wurde, mit dem ein Nutzer interagiert, im Vollbild darzustellen ist, und der eine Orientierung berechnet, in der das auswählbare Objekt dargestellt werden wird, sobald es expandiert ist;
eine Objektexpansionskomponente (140), die eine expandierte Ansicht des auswählbaren Objekts berechnet; und
einen Visualisierungserzeuger (142), der automatisch die expandierte Ansicht des auswählbaren Objekts in editierbaren Form erzeugt, basierend auf der detektierten Nutzerinteraktion, wobei die expandierte Ansicht das auswählbare Objekt im Vollbild auf einem Schirm (166, 172, 602) des Zielbildschirms zeigt, und der automatisch die expandierte Ansicht des auswählbaren Objekts auf dem Schirm des Zielbildschirms darstellt.

2. Die Computeranlage nach Anspruch 1, wobei der Schirm (602) des Zielbildschirms der Bildschirm der Computeranlage ist.

3. Die Computeranlage nach Anspruch 1, wobei der Bildschirm der Computeranlage einen Bildschirm auf einem mobilen Gerät umfasst.

4. Ein Verfahren umfassend:
Darstellen eines Inhaltselements (126, 128, 130) auf einem Bildschirm (158, 166, 172, 602) durch eine Anwendungkomponente (118), die eine Inhalts- und Editiervorrichtung (120) umfasst und die eine oder mehrere Inhalterzeugungsanwendungen betreibt, die eines von Textverarbeitungsprogrammen, Folienpräsentationsprogrammen und Tabellenprogrammen ist/sind, wobei das Inhaltselement ein auswählbares Objekt (162-164, 168-170) umfasst und das Inhaltselement eines von einem Textverarbeitungsprogramm (126), einem Folienpräsentationsprogramm (128) und einer Tabellenkalkulation (130) ist;
Detektieren einer Nutzerinteraktion mit dem auswählbaren Objekt in dem Inhaltselement durch einen Objektinteraktionsdetektor (136);
Identifizieren eines Zielbildschirms (106, 156), auf dem ein expandiertes Objekt, das als das auswählbare Objekt identifiziert wurde, mit dem ein Nutzer interagiert, im Vollbild darzustellen ist, und Berechnen einer Orientierung, in der das auswählbare Objekt dargestellt werden wird, sobald es expandiert ist;
Berechnen einer expandierten Ansicht des auswählbaren Objekts; und
automatisches Erzeugen der expandierten Ansicht des auswählbaren Objekts in editierbarer Form, basierend auf der detektierten Nutzerinteraktion, wobei die expandierte Ansicht das auswählbare Objekt im Vollbild auf einem Schirm (166, 172, 602) des Zielbildschirms darstellt, und automatisches Darstellen der expandierten Ansicht des auswählbaren Objekts auf dem Schirm des Zielbildschirms.

5. Das Verfahren nach Anspruch 4 und weiter umfassend:
Empfangen einer Nutzereingabe zum Editieren durch die expandierte Ansicht;
Durchführen einer Editierung des auswählbaren Objekts basierend auf der Nutzereingabe zum Editieren; und
beim Verlassen der expandierten Ansicht, Speichern der Editierung des auswählbaren Objekts.

## Revendications

1. Système informatique (102) comprenant:
un composant d'application (118) comprenant un système de contenu et de modification (120) et exécutant une ou plusieurs applications de création de contenu, l'une des applications de traitement de texte, des applications de présentation à diapositives et des applications à tableur pour afficher un élément de contenu (126, 128, 130) sur un écran d'affichage du système informatique (158, 166, 172, 602),
l'élément de contenu comprenant un objet pouvant être sélectionné (162-164, 168-170),
et l'article contenu faisant partie d'un document de traitement de texte (126), d'une présentation de diapositives (128) et d'une feuille de calcul (130);
un processeur (122);
un magasin de contenu (124);
un système de visualisation (134) comprenant:
un détecteur d'interaction d'objet (136) qui détecte l'interaction de l'utilisateur avec l'élément sélectionnable objet dans l'élément de contenu;
un calculateur d'orientation (138) qui identifie un affichage de destination (106, 156),
où un objet élargi, identifié comme étant l'objet sélectionnable avec lequel un utilisateur interagit, qu'il faut à afficher, en plein écran, et qui calcule une orientation dans laquelle l'objet sélectionnable sera affiché, une fois développé;
un composant d'expansion d'objet (140) qui calcule une vue développée de l'objet sélectionnable; et
un générateur de visualisation (142) qui génère automatiquement la vue agrandie de l'objet sélectionnable sous forme éditable, fondé sur l'interaction utilisateur détectée, dans lequel la vue développée montre l'objet sélectionnable en plein écran sur un écran (166, 172, 602) de l'affichage de destination et qui affiche automatiquement la vue développée de l'objet sélectionnable sur l'écran (108, 002) de l'affichage de destination.

2. Système informatique selon la revendication 1, dans lequel l'écran (602) de l'affichage de destination est l'écran d'affichage du système informatique.

3. Système informatique selon la revendication 1, dans lequel l'écran d'affichage du système informatique comprend un écran d'affichage sur un appareil mobile.

4. Procédé, comprenant les étapes suivantes:
afficher un élément de contenu (126, 128, 130) sur un écran d'affichage (158, 166, 172, 602) par un composant d'application (118) qui comprend un système de contenu et de modification (120) et exécute une ou plusieurs applications de création de contenu, à savoir des applications de traitement de texte, des applications de présentation de diapositives et des applications de tableur, l'élément de contenu comprenant un objet sélectionnable (162-164, 168-170) et l'élément de le contenu étant l'un des éléments suivants: document de traitement de texte (126), présentation de diapositives (128) et tableur (130);
détecter l'interaction de l'utilisateur avec l'objet sélectionnable dans l'élément de contenu par un détecteur d'interaction d'objet (136);
identifier un affichage de destination (106, 156),
où un objet élargi, identifié comme étant l'objet sélectionnable avec lequel un utilisateur interagit, qu'il faut à afficher, en plein écran, et qui calcule une orientation dans laquelle l'objet pouvant être sélectionnable sera affiché, une fois développé;
calculer une vue développée de l'objet pouvant être sélectionné; et
générer automatiquement la vue agrandie de l'objet sélectionnable sous forme éditable, fondé sur l'interaction utilisateur détectée, dans lequel la vue développée montre l'objet sélectionnable en plein écran sur un écran (166, 172, 602) de l'affichage de destination, et afficher automatiquement la vue développée de l'objet sélectionnable sur l'écran de l'affichage de destination.

5. Procédé selon la revendication 4, comprenant en outre les étapes suivantes:
recevoir une entrée utilisateur modifiée par le biais de la vue développée;
effectuer une modification sur l'objet sélectionnable sur la base de l'entrée d'utilisateur de modification; et
lors de la sortie de la vue développée, enregistrer la modification dans l'objet sélectionnable.
